# EUROPÄISCHE PATENTSCHRIFT

(11) **EP 0 865 579 B1**
(45) Veröffentlichungstag und Bekanntmachung des Hinweises auf die Patenterteilung: **13.10.1999**
(21) Anmeldenummer: 97926981.8
(22) Anmeldetag: 06.06.1997
(51) Int. Cl.: F16B 21/06

(54) **RASTVERBINDUNG FÜR ZWEI GEGENEINANDER VERDREHBARE TEILE**
SNAP-LOCK CONNECTION FOR TWO PARTS WHICH CAN ROTATE IN RELATION TO EACH OTHER
LIAISON PAR ENCLIQUETAGE DE DEUX PIECES ROTATIVES L'UNE PAR RAPPORT A L'AUTRE

(30) Priorität: 12.06.1996 WO PCT/DE96/01027; 28.12.1996 DE 19654667
(43) Veröffentlichungstag der Anmeldung: 23.09.1998
(73) Patentinhaber: KNECHT FILTERWERKE GMBH, 70376 Stuttgart (DE)
(72) Erfinder: BRIEDEN, Thomas, D-71336 Waiblingen (DE); MÖHLE, Rolf, D-74626 Bretzfeld (DE); SARWAR, Abdul-Bashir, D-70376 Stuttgart (DE)
(74) Vertreter: Patentanwalts-Partnerschaft Rotermund + Pfusch
(86) Internationale Anmeldenummer: DE9701135
(87) Internationale Veröffentlichungsnummer: WO9747891

(56) Entgegenhaltungen:
- EP-A- 0 723 796
- DE-C- 19 512 327
- DE-U- 9 408 546

## Beschreibung

Die Erfindung betrifft zwei miteinander verrastbare und in verrastetem Zustand gegeneinander verdrehbare Teile.

In EP 0 723 796 A1 ist eine Einrichtung beschrieben, bei der
- an einem der beiden Teile radial federnde Rasthaken ringförmig angeordnet sind,
- an dem jeweils anderen der beiden Teile zur axialen Abstützung der Rasthaken eine Ringflanke vorgesehen ist,
- die eingerasteten Rasthaken durch einen konzentrisch zur Anordnung der Rasthaken ausgerichteten Fixierring gegen ein ungewolltes Lösen aus ihrer Einrastposition gesichert sind,
- der Fixierring und/oder der die Ringflanke bildende Körper radial elastisch verformbar ist bzw. sind und
- die Weite des Ringspaltes zwischen dem Fixierring und der radialen Rasthakenanlagefläche der Ringflanke geringer ist als die radiale Breite der Rasthaken.

Die Erfindung beschäftigt sich mit dem Problem, das Einschnappen der Rastverbindung bei deren Montage zu vereinfachen und gleichzeitig die Lösesicherheit der Verbindung zu erhöhen.

Eine Lösung hierzu zeigt eine Ausführung zweier miteinander verrastbarer und in verrastetem Zustand gegeneinander verdrehbarer Teile mit sämtlichen Merkmalen des Patentanspruchs 1 auf.

Die Erfindung beruht auf dem Gedanken, die beim Schließen der Rastverbindung aufzuweitenden Materialbereiche als theoretisch freischwebenden Ring auszuführen, der lediglich über möglichst wenige dünne Stege axial an einem der beiden zu verbindenden Teile angebunden ist.

Eine besonders vorteilhafte Ausführungsform ist Gegenstand des Anspruchs 2.

Ein Ausführungsbeispiel ist in der Zeichnung dargestellt.

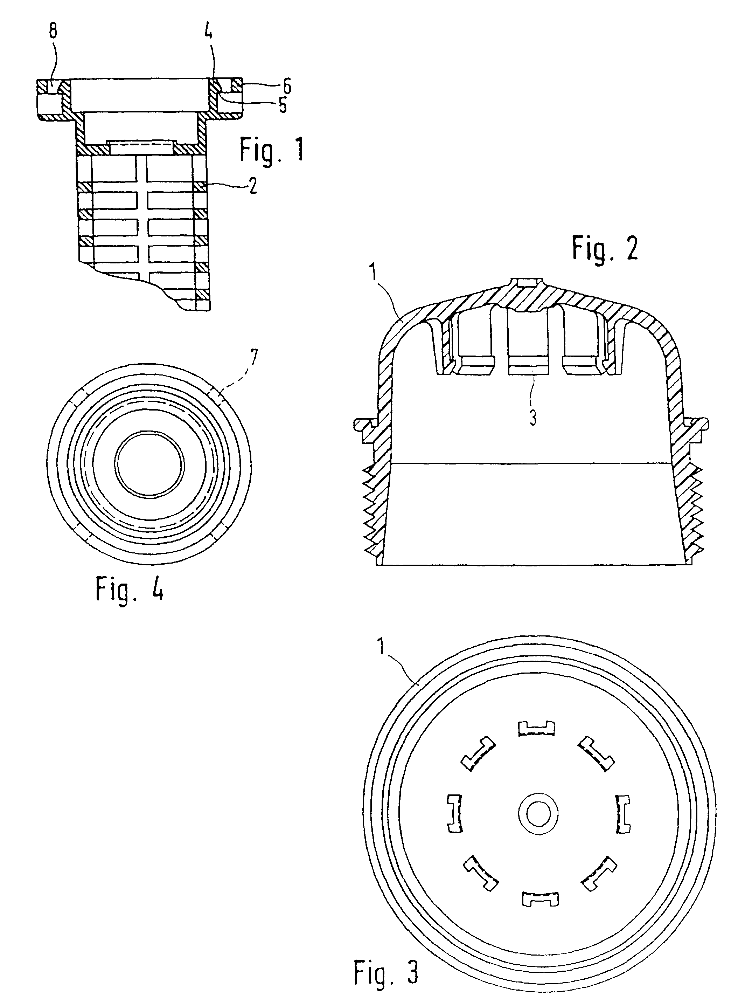

Es zeigen
- Fig. 1: einen Längsschnitt durch ein Ende einer Rohrzarge für die lösbare Aufnahme eines Ringfilterelementes,
- Fig. 2: einen Längsschnitt durch einen Deckel eines Filtergehäuses mit Rasthaken zur lösbaren Verbindung mit der Rohrzarge nach Fig. 1,
- Fig. 3: eine Draufsicht auf den Deckel nach Fig. 2,
- Fig. 4: eine Draufsicht auf das in Fig. 1 dargestellte Ende der Rohrzarge eines Filterelementes.

Das dargestellte Ausführungsbeispiel betrifft die gegeneinander verdrehbare Rastverbindung zwischen einem Schraub-Deckel 1 eines Flüssigkeitsfilters und einer Rohrzarge 2, auf die ein Ringfilterelement lösbar aufschiebbar ist.

In dem geschlossenen Boden des Schraub-Deckels sind in einer ringförmigen Anordnung axial abstehende, radial federnde Rasthaken 3 vorgesehen. Diese Rasthaken 3 sind in eine an der Rohrzarge 2 vorgesehene Aufnahmeeinrichtung einschnappbar.

Die Aufnahmeeinrichtung an der Rohrzarge 2 besteht aus einem radial innen liegenden geschlossenen Ringbund 4 mit einer Ringflanke 5 als axialer Anschlagfläche für die Rasthaken 3.

Koaxial zu dem Ringbund 4 ist ein Fixierring 6 an der Rohrzarge 2 vorgesehen und mit dieser über einzelne auf dem Umfang verteilte Axialstege 7 verbunden.

Die Weite des Ringspaltes 8 zwischen dem Fixierring 6 und dem Ringbund 4 ist geringer als die radiale Breite der Rasthaken 3 an deren Verrastungsende. Bei der Montage der Rastverbindung weiten die Rasthaken 3 daher den Ringspalt jeweils lokal soweit auf, daß die Rasthaken 3 in ihre Einrastposition gelangen können. Das umfangsmäßig lokale Aufweiten des Ringspaltes 8 erfolgt in erster Linie durch eine radial elastische Aufweitung des Fixierringes 6 in den jeweils von den Rasthaken 3 beaufschlagten Umfangsbereichen. Da der Fixierring lediglich über einzelne wenige, relativ dünne Axialstege 7 mit dem Grundkörper der Rohrzarge 2 verbunden ist, ist die notwendige Aufweitung selbst bei einem relativ steifen Material des Fixierringes 6 relativ einfach durch eine elastische Verformung des Fixierringes 6 möglich. Bei der Aufweitung kann sich der Fixierring 6 unrund verformen, indem diejenigen Bereiche, die direkt von den Rasthaken 3 beaufschlagt sind, weiter nach radial außen ausweichen als die zwischen diesen beaufschlagten Stellen liegenden Bereiche, die sich nach radial innen zusammenziehen können.

Die erfindungsgemäße Ausbildung der zur Aufnahme der Rasthaken 3 an der Rohrzarge 2 vorgesehenen Aufnahmeeinrichtung eignet sich besonders vorteilhaft zur Herstellung als Kunststofformteil.

## Patentansprüche

1. Zwei miteinander verrastbare und in verrastetem Zustand gegeneinander verdrehbare Teile (1, 2) mit folgenden Merkmalen:
- an einem der beiden Teile (1 bzw. 2) sind radial federnde Rasthaken (3) ringförmig angeordnet,
- an dem jeweils anderen der beiden Teile (1 bzw. 2) ist eine Ringflanke (5) zur axialen Abstützung der Rasthaken (3) vorgesehen,
- die eingerasteten Rasthaken (3) sind durch einen konzentrisch zur Anordnung der Rasthaken (3) ausgerichteten Fixierring (6) gegen ein ungewolltes Lösen aus ihrer Einrastposition gesichert,
- der Fixierring (6) und/oder der die Ringflanke (5) bildende Körper ist bzw. sind radial elastisch verformbar,
- die Weite des Ringspaltes (8) zwischen dem Fixierring (6) und der radialen Rasthaken-(3) Anlagefläche der Ringflanke (5) ist geringer als die radiale Breite der Rasthaken (3) und
- der Fixierring (6) und/oder der die Ringflanke (5) bildende Körper ist jeweils als ein Ring ausgebildet, der jeweils lediglich über einzelne auf dem Umfang mit Abstand verteilte Stege (7) an einem der zu verbindenden Teile (1 bzw. 2) befestigt ist.

2. Zwei miteinander verrastbare und in verrastetem Zustand gegeneinander verdrehbare Teile nach Anspruch 1,
**dadurch gekennzeichnet,**
daß die Rasthaken (3) in verrastetem Zustand nach radial innen federnd an der Ringflanke (5) des Gegenkörpers anliegen und der Gegenkörper gegenüber dem Fixierring (6) die größere radiale Steifigkeit aufweist.

## Claims

1. Two parts (1, 2) which can be lacthed to one another and, in the latched state, can be rotated with respect to one another, the parts having radially resilient latching hooks, which are arranged in the form of a ring, on one of the two parts (1 or 2) and an annular flank (5), for supporting the latching hooks (3) in the axial direction, on the other part (2 or 1), in which latching connection the latched-in latching hooks (3) are secured by a fixing ring (6), which is aligned concentrically with respect to the arrangement of the latching hooks (3), against undesired release from their latched-in position, and the fixing ring (6) and/or the body which forms the annular flank (5) is or are elastically deformable in the radial direction, and in which latching connection, furthermore, the width of the annular gap (8) between the fixing ring (6) and the radial latching-hook abutment surface of the annular flank (5) is smaller than the radial width of the latching hooks (3), characterized in that the fixing ring (6) and/or the body which forms the annular flank (5) is or are each designed as a ring which is fastened in each case, on one of the parts (1 and 2) which is to be connected, simply via individual webs (7) which are spaced apart over the circumference.

2. Two parts which can be latched to one another and, in the latched state, can be rotated with respect to one another, according to Claim 1, characterized in that, in the latched state, the latching hooks (3) butt against the annular flank (5) of the mating body with radially inward resilient action, and the mating body has greater radial rigidity than the fixing ring (6).

## Revendications

1. Deux pièces (1, 2) encliquetables l'une avec l'autre et rotatives l'une par rapport à l'autre à l'état d'encliquetage, avec les caractéristiques suivantes :
- des crochets d'encliquetage (3), élastiques dans le sens radial, sont disposés en anneau sur l'une des deux pièces (1 et 2),
- un flanc annulaire (5) est prévu sur chacune autre des deux pièces (1 et 2) pour l'appui axial des crochets d'encliquetage (3),
- les crochets (3) encliquetés sont bloqués contre un déblocage inopiné de leur position d'encliquetage par une bague de fixation (6), orientée concentriquement par rapport à l'agencement des crochets d'encliquetage (3),
- la bague de fixation (6) et/ou le corps formant le flanc annulaire (5) est ou sont déformables élastiquement dans le sens radial,
- la largeur de la fente annulaire (8) comprise entre la bague de fixation (6) et la surface d'appui radiale du flanc annulaire (5) pour les crochets d'encliquetage (3) est inférieure à la largeur radiale des crochets (3), et
- la bague de fixation (6) ou le corps formant le flanc annulaire (5) ou chacun de ceux-ci est réalisé sous forme d'une bague, fixée uniquement sur l'une des pièces (1 et 2) à assembler, par l'intermédiaire de traverses individuelles (7) réparties à distance sur le pourtour.

2. Deux pièces encliquetables l'une avec l'autre et rotatives l'une par rapport à l'autre à l'état d'encliquetage suivant la revendication 1, caractérisées en ce que les crochets d'encliquetage (3) s'appliquent à l'état d'encliquetage, par élasticité radialement vers l'intérieur sur le flanc annulaire (5) du contre-corps, et en ce que le contre-corps présente la rigidité radiale la plus élevée par rapport à la bague de fixation (6).
